# EUROPEAN PATENT APPLICATION

(11) **EP 4 772 426 A1**
(43) Date of publication of application: **08.07.2026**
(21) Application number: 25179038.2
(22) Date of filing: 27.05.2025
(51) Int. Cl.: B62K 21/26

(54) **ANTI-VIBRATION STABILIZING HANDLE**

(30) Priority: 02.01.2025 PL 45089325
(71) Applicant: LEVEL OF FUTURE SPOLKA Z OGRANICZONA ODPOWIEDZIALNOSCIA, 91-336 Lodz (PL)
(72) Inventor: Jozwik, Marcin, 97-330 Uszczyn (PL); Margolis, Aleksander, 01-514 Warszawa (PL); Kilinski, Jan, 34-312 Miedzybrodzie Zywieckie (PL)
(74) Representative: Dominiak, Malgorzata Maria

(57) **Abstract**

Anti-vibration stabilizing handle characterized in that it consists of a sleeve-shaped handle of any cross-section, which is placed onto a core, the first end of which in the part cooperating with the device used is widened and has a diameter of 21.5 mm +/- 7 mm, and at the opposite, free second end of the core there is a deformation located 30-80 mm from the free end of the handle so that when viewed from the first end, a retaining collar is formed the outer surface of the core, and the space between the retaining collar and the free second end of the core has preferably a square cross-section with two deformation sections, with a threaded orifice located, preferably in the center of the cross-section of the core, wherein the diameter of the core outside the area of cooperation with the device used, and in the area above which the handle is located is 10-16 mm, and the handle in this area is not in contact the core, and directly next to the retaining collar the first section of deformation of the free end of the core over a distance of 1 to 3 mm is lowered by not less than 1 mm, so that it forms a groove for the first absorber, and at a distance of 5-10 mm from the retaining collar towards the second free end of the core there a second section of deformation of the outer surface of the core, and wherein around the core, on its deformation section, at least one absorber is placed, wherein the internal orifice of the absorber corresponds in shape to the shape of the deformation of the core in this area, and its free end is pressed with a washer and a screw screwed into the threaded orifice in the free end of the core.

## Description

The subject of the invention is an anti-vibration stabilizing handle with an increased shaft alignment capacity.

Swivel pins are structural components of kinematic chains of machines and devices, the task of which, apart from connecting components, is to eliminate negative impact of vibrations on the components of the device. The most popular place of their use seems to be the automotive industry, which uses them on a mass scale in vehicle steering systems and suspensions.

A traditionally constructed swivel pin consists of a body permanently connected to a threaded connector, wherein inside the body a spherical socket - a bearing shell is placed together with a cooperating ball joint of the shaft/pin. The ball joint of the shaft/pin is held in the socket/bearing shell by means of an elastic ring closing the socket. Often, the joint is pushed away from the bottom of the bearing shell by an additional spring. The contact edge of the shaft/pin with the bearing is most often surrounded by a rubber cover to prevent migration of contaminants into the interior of the joint. The body of the swivel pin is additionally surrounded by a rubber cover through which the shaft/pin passes. The rubber cover can be additionally attached to the body with an elastic or steel clamp. When attached, for example in a suspension system, the shaft is set in a correct working position by setting the geometry of other suspension elements, and during use it returns to the original "zero" position under the action of an elastic pressure ring mounted in its body.

Modifications to the traditional design of pins are known, in which after placing the joint in the bearing shell, the space between the body and the shaft is filled with hard rubber or rubber. This filling takes the main effort of aligning the shaft in its original position.

Designs are known, in which the joint is placed in a slightly deformed bearing shell, which additionally forces the shaft to align. In this case, the bearing shell is often locally overloaded, which can even lead to its disintegration.

Swivel pins are components that wear out exceptionally quickly, regardless of how they are constructed. The tendency to wear out quickly results primarily from the fact that the rubber cover or the rubber filling is damaged, and contaminants and water get into the joint. Then the ability of the pin to return to the "zero" axial position decreases, which in turn increases the ease of migration of contaminants. Then the bearing shell is damaged and the shaft becomes immobile, which forces further destruction of the pin and the need to replace it.

Analysis of examples of destruction of swivel pins leads to a conclusion that the first contaminants that damage and block the joint are fragments of the pin components themselves, which are damaged during impacts, for example, of the suspension on uneven ground, or during movement in machines. Most often, particles of contaminants - metal come from the elastic ring, and then from the rubber cover or from the detached elastic filling.

A swivel pin according to P.438879 is also known, comprising a body, inside which a spherical socket - a bearing shell is placed together with a at least partially spherical ball joint of a shaft cooperating with it, wherein the at least partially spherical joint of the shaft has a shape of a sphere at least on the side that contacts the bearing shell, and the at least partially spherical joint of the shaft is held in the socket/bearing shell by means of a displacement spring closing the socket, wherein the displacement spring is spread between the at least partially spherical joint and the cover closing the body, and on the side of the body opposite to the cover closing the body, a disc spring is placed around the shaft, the ring of the disc spring is attached to the body and wherein the shaft passes through the central orifice of the disc spring, wherein the disc spring is equipped with at least three feathers turned out and directed away from the interior of the joint. Such a solution significantly improves the durability of the pin itself, as well as the elements of the kinematic chain of machines and devices connected to it.

Unexpectedly, pins of this type, implemented in handles or devices allowing for operation of devices, can successfully improve the comfort of using devices in which the user's body is exposed to strong vibrations transmitted through the components for control of the device by the operator.

Taking into account the technical features of known solutions, the purpose was to develop a pin design that would provide an additional, undisturbed range of movement, while maintaining increased resistance to damage through precise and durable alignment of the shaft in the bearing. This was achieved by means of to a handle according to the invention.

In case of components of the anti-vibration stabilizing handle according to the invention, its inner and outer sides are defined, such that the inner side is the side placed in the device used and the outer side is defined as the free, distal end of the anti-vibration stabilizing handle according to the invention.

The anti-vibration stabilizing handle according to the invention consists of a sleeve-shaped handle of any cross-section, the internal diameter of which is not less than 18 mm, wherein the sleeve is placed onto a core, the first end of the core in the part cooperating with the device used is widened and has a diameter of 21.5 mm +/- 7 mm, and at the opposite free second end of the core there is a deformation changing the diameter of the cross-section of the core, located 30-80 mm, preferably 30 mm or 40 mm or 50 mm or 60 mm or 70 mm or 80 mm from the free end of the handle,
wherein a threaded orifice is located in the core, preferably in the center of the cross-section of the core,
and wherein the diameter of the core outside the area of cooperation with the device used, and in the area above which the handle is located is 10-16 mm, and the handle in this area is not in contact with the core,
and wherein around the core, on its deformation, at least one absorber in placed, and the internal orifice of the absorber corresponds in shape to the shape of the deformation of the core in this area, and the free end of the absorber is pressed with a washer and a screw screwed into the threaded orifice in the free end of the core,
wherein the absorber is made of an elastic material, the Young's modulus of which is <5GPa, and the thickness of the walls of the cross-section of the absorber is not greater than 3 mm.

The deformation of the core allows for placing at least one absorber in it and stabilizing it. The absorber transfers forces in the axial, radial direction and the moment of force in the axial direction.

Preferably, when viewed from the first end of the core, a retaining collar is formed on the outer surface of the core. The retaining collar prevents the absorber and the handle from sliding along the axis of the handle.

Preferably, the core in the section between the retaining collar and the free, second end of the core has a square cross-section. The square cross-section prevents the core from rotation.

Preferably, the deformation changing the diameter of the cross-section of the core is differentiated in two sections.

Preferably, a first section of deformation of the free end of the core is placed directly next to the retaining collar over a distance of 1 to 3 mm, wherein the first section of deformation of the free end of the core is lowered by not less than 1 mm, forming a groove for the first absorber.

Preferably, at a distance of 5-10 mm from the retaining collar towards the second free end of the core there is a second section of deformation of the free end of the core, changing the diameter of the cross-section of the core and forming a groove for the second absorber.

Preferably, the first absorber is placed onto the core, wherein the first absorber has the shape of a washer adhering to the outer surface of the retaining collar in the groove for the first absorber.

Preferably, the second absorber is placed onto the second section of the deformation of the core in the groove for the second absorber, and the end of the second absorber is pressed with a washer and a screw screwed into the threaded orifice in the free end of the core.

Preferably, the tightening force of the screw is such that the second absorber is displaced by the washer towards the inner surface of the handle. Preferably, the sleeve forming the handle is bent in such a way that its bending radius is not less than 40 mm.

Preferably, the core and the handle are made of a material selected from aluminum, steel, titanium or carbon fiber composite.

The advantage of the anti-vibration handle according to the invention is obtaining an additional, undisturbed range of movements, while maintaining increased resistance to damage through precise and durable alignment of the core and the lack of a rigid connection between the core and the sleeve. The structure of the handle according to the invention and the materials used affect the increased resistance to damage of the handle.

The handle according to the invention is shown in the drawing, in which
Fig. 1 shows a cross-section of the handle according to the invention - (A) view of the handle from the outside, (B) cross-section A-A and (C) cross-sections B-B, G-G and F-F;
Fig. 2 shows a cross-section of the handle according to the invention with visible structural components;
Fig. 3 cross-section of the handle in a curved embodiment.

### Example I

In case of components of the anti-vibration stabilizing handle according to the invention, its inner and outer sides are defined, such that the inner side is the side placed in the device used, and the outer side is defined as the free, distal end of the anti-vibration stabilizing handle according to the invention.

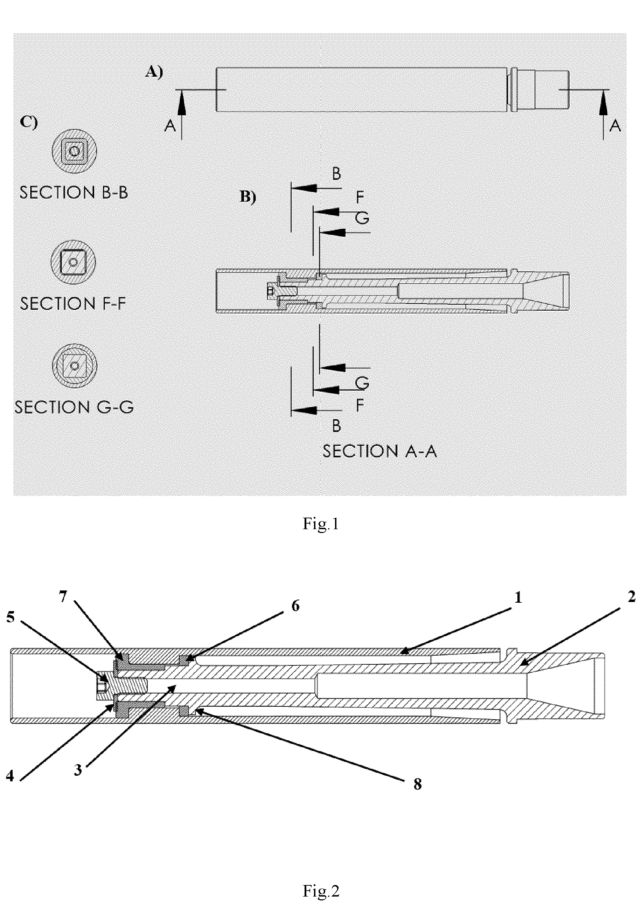

The anti-vibration stabilizing handle according to the invention, shown in figures 1 and 2, consists of a sleeve-shaped handle 1, which is placed onto a core 2, the first end of the core 2 in the part cooperating with the device used is widened and has a diameter of 21.5 mm +/- 7 mm, preferably 22.2 mm, and at the opposite, free second end of the core 2 there is a deformation located 30-80 mm, preferably 31.26 mm, from the free end of the handle. When viewed from the first end, a retaining collar 8 is formed on the outer surface of the core 2, and the space between the retaining collar 8 and the free second end of the core 2 has a square cross-section with two deformation sections, with a threaded orifice 3 located in the center of the cross-section of the core 2. The diameter of the core 2 outside the area of cooperation with the operated device and in the area above which the handle is located is 10-16 mm, and the handle in this area is not in contact with the core 2. Directly next to the retaining collar 8, there is a first section of deformation of the free end of the core 2 over a distance of 1 to 3 mm, wherein the first section of deformation of the free end of the core 2 is lowered by not less than 1 mm, forming a groove for the first absorber 6. At a distance of 5-10 mm, preferably 7 mm, from the retaining collar 8 towards the second free end of the core 2, there is a second section of deformation of the outer surface of the core 2 changing the diameter of the cross-section of the core 2, which is preferably lowered by 1.30 mm in relation to the first section of deformation. Around the core 2, on its deformation, absorbers 6 and 7 are placed, so that the first, inner absorber 6 has a shape of a washer adhering to the outer surface of the retaining collar 8 and is placed in the groove for the first absorber 6, and the inner orifice of the first absorber 6 corresponds in shape to the shape of the deformation of the core 2 in this area, and the second absorber 7 is placed onto the second section of deformation of the core 2, and its free end is pressed with a washer 4 and a screw 5 screwed into the threaded orifice 3 in the free end of the core 2. The tightening force of the screw 5 is such that the second absorber 7 is displaced by the washer towards the inner surface of the handle.

The handle has the shape of a sleeve 1, the internal diameter of which is not less than 18 mm, and is preferably 20.20 mm.

Absorbers 6 and 7 are made of an elastic material, the Young's modulus of which is <5GPa, e.g. TPU (thermoplastic polyurethane), and the cross-section of the orifices made in them corresponds in size and shape to the size and shape of the core 2 on which they are placed. The thickness of the walls of the cross-section of the absorbers 6 and 7 is not greater than 3 mm, e.g. 1.85 mm.

Core 2 and the handle are made of aluminum and/or steel and/or titanium and/or carbon fiber composite.

The anti-vibration handles of example I can be mounted, e.g. instead of grips in bicycle handlebars or in devices generating high vibrations, such as soil compactors.

A bicycle handlebar equipped with handles according to the invention was tested in accordance with the requirements of the standard EN 17404:2022, 4.3.6.2.7. In the first two tests, although the handlebar was damaged, the grips remained functional. In the third case, both the grips and the handlebar passed the test positively.

### Example II

In case of the components of the anti-vibration stabilizing handle according to the invention, its inner and outer sides are defined, such that the inner side is the side placed in the device used, and the outer side is defined as the free, distal end of the anti-vibration stabilizing handle according to the invention.

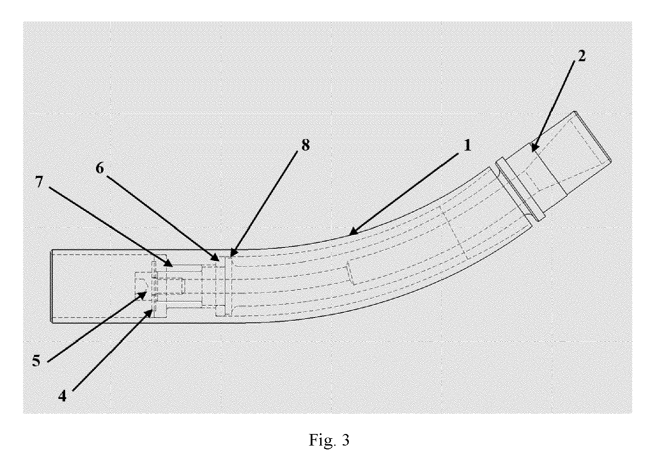

The anti-vibration stabilizing handle according to the invention, shown in figure 3, consists of a sleeve-shaped handle 1 of any cross-section, which is bent in such a way that its bending radius is 40 mm. The handle is placed on a core 2, the first end of the core 2 in the part cooperating with the device used is widened and has a diameter of 21.5 mm +/- 7 mm, and at the opposite, free second end of the core 2 there is a deformation located 30-80 mm from the free end of the handle. When viewed from the first end, a retaining collar 8 is formed on the outer surface of the core 2, and the space between the retaining collar 8 and the free second end of the core 2 has a square cross-section with two deformation sections, with a threaded orifice 3 located preferably in the center of the cross-section of the core 2. The diameter of the core 2 outside the area of cooperation with the device used and in the area above which the handle is located is 10-16 mm, and the handle in this area is not in contact with the core 2. Directly next to the retaining collar 8, there is a first section of deformation of the free end of the core 2 over a distance of 1 to 3 mm, wherein the first section of deformation of the free end of the core 2 is lowered by not less than 1 mm, forming a groove for the first absorber 6. At a distance of 5-10 mm from the retaining collar 8 towards the second free end of the core 2, there is a second section of deformation of the outer surface of the core 2, changing the diameter of the cross-section of the core 2. Around the core 2, on its deformation, at least two absorbers 6 and 7 are placed, so that the first, inner absorber 6 has the shape of a washer adhering to the outer surface of the retaining collar 8 and is placed in a groove for the first absorber 6, and the inner orifice of the first absorber 6 corresponds in shape to the shape of the deformation of the core 2 in this area, and the second absorber 7 is placed onto the second deformed area of the core 2, and its free end is pressed with a washer 4 and a screw 5 screwed into the threaded orifice 3 in the free end of the core 2. The tightening force of the screw 5 is such that the second absorber 7 is displaced by the washer towards the inner surface of the handle.

The handle has a shape of a sleeve 1, the internal diameter of which is not less than 18 mm.

Absorbers 6 and 7 are made of an elastic material, the Young's modulus of which is <5GPa, e.g. TPU, and the cross-section of the orifices made in them corresponds in size and shape to the size and shape of the core 2 on which they are placed. The thickness of the walls of the cross-section of absorbers 6 and 7 is no greater than 3 mm.

Core 2 and the handle are made of aluminum and/or steel and/or titanium and/or carbon fiber composite.

## Claims

1. An anti-vibration stabilizing handle **characterized in that** it consists of a sleeve-shaped handle (1) of any cross-section, the internal diameter of which is not less than 18 mm, wherein the sleeve (1) is placed onto a core (2), the first end of the core (2) in the part cooperating with the device used is widened and has a diameter of 21.5 mm +/- 7 mm, and at the opposite free second end of the core (2) there is a deformation changing the diameter of the cross-section of the core (2), located 30-80 mm, preferably 30 mm or 40 mm or 50 mm or 60 mm or 70 mm or 80 mm from the free end of the handle,
wherein a threaded orifice (3) is located in the core (2), preferably in the center of the cross-section of the core (2),
and wherein the diameter of the core (2) outside the area of cooperation with the device used, and in the area above which the handle is located is 10-16 mm, and the handle in this area is not in contact the core (2),
and wherein around the core (2), on its deformation, at least one absorber (6,7) in placed, and the internal orifice of the absorber (6,7) corresponds in shape to the shape of the deformation of the core (2) in this area, and the free end of the absorber (6,7) is pressed with a washer (4) and a screw (5) screwed into a threaded orifice (3) in the free end of the core (2),
wherein the absorber (6,7) is made of an elastic material, the Young's modulus of which <5GPa, and the thickness of the walls of the cross-section of the absorber (6,7) is not greater than 3 mm.

2. The anti-vibration stabilizing handle according to claim 1, **characterized in that** when viewed from the first end of the core (2), a retaining collar (8) is formed on the outer surface of the core (2).

3. The anti-vibration stabilizing handle according to claim 1 or 2, **characterized in that** the core (2) in the section between the retaining collar (8) and the free, second end of the core (2) has a square cross-section.

4. The anti-vibration stabilizing handle according to claim 1 or 2 or 3, **characterized in that** the deformation changing the cross-sectional diameter of the core (2) is differentiated in two sections.

5. The anti-vibration stabilizing handle according to claim 4, **characterized in that** a first section of deformation of the free end of the core (2) is placed directly next to the retaining collar (8) over a distance of 1 to 3 mm, wherein the first section of deformation of the free end of the core (2) is lowered by not less than 1 mm, forming a groove for the first absorber (6).

6. The anti-vibration stabilizing handle according to claim 4 or 5, **characterized in that** at a distance of 5-10 mm from the retaining collar (8) towards the second free end of the core (2) there is a second section of deformation of the free end of the core (2), changing the diameter of the cross-section of the core (2) and creating a groove for the second absorber (7).

7. The anti-vibration stabilizing handle according to claim 5, **characterized in that** the first absorber (6) is placed onto the core (2), wherein the first absorber (6) has the shape of a washer adhering to the outer surface of the retaining collar (8) in the groove for the first absorber (6).

8. The anti-vibration stabilizing handle according to claim 6, **characterized in that** the second absorber (7) is placed onto the second section of the deformation of the core (2) in the groove for the second absorber (7), and the end of the second absorber (7) is pressed with a washer (4) and a screw (5) screwed into the threaded orifice (3) in the free end of the core (2).

9. The anti-vibration stabilizing handle according to claim 8, **characterized in that** the tightening force of the screw (5) is such that the second absorber (7) is displaced by the washer towards the inner surface of the handle.

10. The anti-vibration stabilizing handle according to any of the preceding claims, **characterized in that** the sleeve (1) forming the handle is bent in such a way that its bending radius is not less than 40 mm.

11. The anti-vibration stabilizing handle according to any one of the preceding claims, **characterized in that** the core (2) and the handle are made of a material selected from aluminum, steel, titanium or a carbon fiber composite.
